# EUROPÄISCHE PATENTSCHRIFT

(11) **EP 0 361 612 B1**
(45) Veröffentlichungstag und Bekanntmachung des Hinweises auf die Patenterteilung: **03.08.1994**
(21) Anmeldenummer: 89202410.0
(22) Anmeldetag: 25.09.1989
(51) Int. Cl.: H01M 8/06

(54) **Verfahren zum Erzeugen von Elektrizität**
Method for generating electricity
Méthode pour la production d'électricité

(30) Priorität: 26.09.1988 NL 8802357
(43) Veröffentlichungstag der Anmeldung: 04.04.1990
(73) Patentinhaber: KTI GROUP B.V., NL-2715 CA Zoetermeer (NL)
(72) Erfinder: Van den Oosterkamp, Paul F., NL-2726 SH Zoetermeer (NL); Nomden, Jan F., NL-2715 AM Zoetermeer (NL)
(74) Vertreter: Smulders, Theodorus A.H.J., Ir.

(56) Entgegenhaltungen:
- EP-A- 0 071 967
- EP-A- 0 184 970
- FR-A- 1 512 172
- FR-A- 1 521 234
- GB-A- 2 182 195
- US-A- 3 973 993
- US-A- 4 554 223
- INTERNATIONAL JOURNAL OF ENERGY SYSTEMS, Band 5, Nr. 1, 1985, Seiten 1-8; K.A. ALKASAB et al.: "Thermodynamic and performance model for phosphoric acid fuel-cell system"
- 21st INTERSOCIETY ENERGY CONVERSION ENGINEERING CONFERENCE, ADVANCING TOWARD TECHNOLOGY BREAKOUT IN ENERGY CONVERSION, San Diego, California, Band 2, 25.-29. August 1986, Seiten 1092-1096, American Chemical Society, US; G. STEINFELD et al.: "Diesel fuel processing for phosphoric acid fuel cells"
- RAPPORT EPRI EM-384, January 1977, Seiten 1-1 - A6-27, EXXON Enterprises, Inc., New York, US; E.R. ELZINGA et al.: "Application of the Alsthom/Exxon alkaline fuel cell system to utility power generation"
- PATENT ABSTRACTS OF JAPAN, Band 12, Nr. 402 (E-673)[3249], 25. Oktober 1988; JP-A-63 141 269 (JGC CORP.) 13-06-1988

## Beschreibung

Die Erfindung bezieht sich auf ein Verfahren zum Erzeugen von Elektrizität unter Anwendung eines Brennstoffzellensystems.

Zum Erzeugen von Elektrizität aus fossilen Brennstoffen oder Brennstoffen auf der Basis anderer Kohlenwasserstoffe benutzt man herkömmlicherweise im allgemeinen Elektrizitätswerke, in denen Brennstoff, wie Öl oder Erdgas, zum Antreiben von Gasturbinen und/oder Dampfturbinen verbrennt wird, welche Turbinen wieder mit Elektrizitätsgeneratoren verbunden sind.

Ein beträchtlicher Nachteil solcher Systeme ist ihre verhältnismässig niedrige elektrische Leistung. Man hat versucht, diesen Nachteil zu beseitigen durch Anwendung von Systemen mit einer höheren Leistung, wie Brennstoffzellensystemen. Bei solchen Systemen kann man in einer H₂-produzierenden Einheit fossilen Brennstoff oder anderen Brennstof in ein H₂ enthaltendes Gas umsetzen, wonach dieses Gas, erwünschtenfalls nach weiterer Reinigung, dem Anodenraum einer Brennstoffzelleneinheit zugeführt wird. Solche Systeme sind schon bekannt und es werden noch viele Untersuchungen zur Verbesserung dieser Systeme durchgeführt.

Die Anwendung solcher Systeme hat eine Anzahl Vorteile. Zunächst ist die Leistung der Brennstoffzellen hoch, zumal wenn die verschiedenen Teile des Systems in geeigneter Weise integriert sind. In einem derartigen Fall kann die Leistung der gesammten Anlage sogar höher als die Leistung der Brennstoffzelle sein.

Zweitens erhält man eine Elektrizitätsproduktion mit einer niedrigen Emission von Schadstoffen, während drittens die "partiellen Belastungscharakteristiken" gut sind, was bedeutet, dass auch bei niedriger Belastung eine gute Leistung erhalten wird. Schliesslich gibt es noch den Vorteil, dass man modular konstruieren kann.

Anlagen auf der Basis von Brennstoffzellen umfassen im Allgemeinen eine Vorbehandlung des Brennstoffes (Entschwefelung, Vorerwärming), eine Umsetzung des Brennstoffes in ein Gas, das H₂ und CO enthält, durch Dampfreformierung und eine anschliessende "shift"-Reaktion zum weiteren Umsetzen von CO in H₂. Nach dem Entfernen gegebenenfalls vorhandener Verunreinigungen ist das Gas zur Anwendung in einer Brennstoffzelle geeignet.

Man führt dieses Gas den Anodenräumen der Brennstoffzelleneinheit zu, während ein O₂ enthaltendes Gas den Kathodenräumen derselben Einheit zugeführt wird. In der Brennstoffzelle werden Elektrizität und Wärme erzeugt, wobei die Elektrizität im allgemeinen anschliessend in Wechselstrom umgesetzt wird, damit dieser in dem Elektrizitätsnetz angewendet werden Kann. Die Wärme muss abgeführt werden, um zu vermeiden, dass die Zelle zu heiss wird.

Es sind verschiedene Typen von Brennstoffzellen bekannt, wobei der Unterschied zumal in dem angewendeten Elektrolyt typ steckt. Diese Elektrolyte werden in der Literatur reichlich beschrieben und umfassen u.a. Phosphorsäure, geschmolzenes Carbonat, alkalische Elektrolyten, feste Oxide und feste Polymere.

In dem Bericht von E.R. Elzinga et al, EPRI EM-384, Januar 1977, EXXON Enterprises, "Application of the Alsthom/Exxon alkaline fuel cell System to utility power generation", Seiten A2-4, und Seiten 3-4 bis 3-6, wird die Anwendung von alkalischen Brennstoffzellen für Stromerzeugung erläutert.

Zum Erhalten einer ausreichend hohen Leistung wendet man bei den betreffenden Systemen eine weitgehende Integration der verschiedenen Prozess-Ströme an. Dies bedeutet jedoch, dass bei Störungen in einem oder mehrerer Teilen der Anlage, oder bei Unterbrechung der Stromabnahme meistens die ganze Anlage stillgelegt werden muss. Es ist selbstverständlich möglich, diese Probleme durch Anwendung einer deutlich weniger starken Integration zu vermeiden. Dies hat jedoch den Nachteil, dass die Leistung geringer wird.

Bei der Anwendung von Brennstoffzellensystemen ist es wichtig, einerseits über eine gute Wärmerückgewinnung zu verfügen, während andererseits eine gute Stabilisation des ganzen Systems und eine gute Regelung erwünscht sind.

Die Aufgabe der Erfindung ist die Verschaffung eines Verfahrens zum Erzeugen von Elektrizität aus einem Brennstoff auf der Basis eines oder mehrerer Kohlenwasserstoffe unter Anwendung eines Brennstoffzellensystems, wobei von einer weitgehenden Integration die Rede ist, aber wobei die damit zusammenhängende Probleme nicht oder in weit geringerem Masse auftreten, während ausserdem eine einfache und gut zu regelnde Anlage erhalten wird.

Die Erfindung betrifft daher ein Verfahren zum Erzeugen von Elektrizität aus einem Brennstoff auf der Basis eines oder mehrerer Kohlenwasserstoffe, wobei man
- den genannten Brennstoff katalytisch in ein CO- und H₂-haltiges Gas umsetzt,
- das so erhaltene Gas unter Bildung von Prozeßdampf abkühlt,
- das abgekühlte Gas mindestens einem "shift"-Reaktor zuführt, in dem wenigstens ein Teil des vorhandenen CO mit Dampf unter Bildung von H₂ umgesetzt wird,
- das H₂-haltige Gas den Anodenräumen mindestens einer Brennstoffzelleneinheit zuführt, die unter Kühlung und gleichzeitiger Bildung von Prozeßdampf auf Arbeitstemperatur gehalten wird,
- die Arbeitstemperatur der Brennstoffzelleneinheit und die Temperatur des dem "shift"-Reaktor zugeführten Gases um nicht mehr als 50°C voneinander verschieden hält,
- eine Brennstoffzelleneinneit mit einer Arbeitstemperatur von mindestens 125°C anwendet,
- den erzeugten Prozeßdampf auch anwendet zum Erwärmen von Einspeisungen in die Brennstoffzelle, und
- die Prozeßdampferzeugung in ein und demselben Dampfsystem vornimmt, wobei in der Verfahrensführung über die Regelung des Dampfdrucks im Dampfsystem eine Dampftemperatur festgelegt wird, die hinreichend unter der Arbeitstemperatur der Zelle liegt, um den Überschuß an Wärme abzuführen.

Durch Anwendung der gegebenen Temperaturordnung und die Integration der Aufrechterhaltung der Arbeitstemperatur der Brennstoffzelle mit der Erwärmung der Speisungen nach der Brennstoffzelleneinheit, gemäss der Erfindung ist es möglich, die verschiedenen Stufen des Verfahrens weitgehend miteinander zu integrieren.

Gemäss der Erfindung benutzt man ein integriertes Dampfsystem für das Zu- end Abführen von Wärme nach und von den verschiedenen Verfahrensteilen, und insbesondere der Dampfproduktion auf der Basis der in dem "shift"-Reaktor und der Brennstoffzelleneinheit produzierten Wärme. Gemäss der Erfindung geht man von ein und demselben integrierten Dampfsystem für die H₂-Produktions-einheiten und für die Brennstoffzelleneinheit aus, was u.a. bedeutet, dass das Dampfsystem für all diese Einheiten bei demselben Druck und derselben Temperatur funktioniert.

Durch die Massnahmen nach dem erfindungsgemässen Verfahren enthält man die Möglichkeit, eine optimale Integration der verschiedenen Verfahrensteile zu verwirklichen, ohne dass dabei die Nachteile auftreten, die man bei einer weitgehenden Integration erwarten würde. In der Praxis hat es sich gezeigt, dass es schwierig ist, den bekannten "fuel cell processor" während langer Zeit störungsfrei arbeiten zu lassen. Probleme, die dabei auftraten, waren die Folge der Integration, wobei Abweichungen in einer bestimmten Verfahrensstufe eine Störung in einer anderen Verfahrensstufe verursachten.

Es hat sich nun herausgestellt, dass durch die Integration gemäss der Erfindung, bei der man über ein einziges Dampfsystem, das vorzugsweise mehr Dampf liefert als zum Betreiben der Anlage benötigt ist, die ganze Anlage integriert, die Möglichkeiten zum Abfangen von Abweichungen und Störungen viel grösser sind, so dass eine Abweichung oder Störung nicht direkt das Stillegen der ganzen Anlage zur Folge hat. Weil das Dampfsystem leicht auf Temperatur gehalten werden kann, gegebenenfalls zusammen mit einem Start-Erwärmer, der mit von aussen her zugeführtem Brennstoff geheizt werden kann, können auch bei einem eventuellen Einstellen die Betriebstemperatur des "shift"-Reaktors und der Brennstoffzelle aufrechterhalten werden, was ein späteres Starten stark vereinfacht.

Ein wichtiger Vorteil des Verfahrens gemäss der Erfindung steckt auch noch darin, dass durch die Integration gemäss der Erfindung eine gute Stabilisation des Verfahrens erhalten wird. U.a. durch die Anwendung eines integrierten Dampfsystems erhält man eine stabile und gut zu regelnde Anlage, die gegen Schwankungen in verschiedenen Teilen derselben wenig empfindlich ist.

Auch beim Starten der Anlage hat das Verfahren gemäss der Erfindung viele Vorteile, weil durch die Anwendung der Integration über die Temperatur der verschiedenen Teile in einfacher Weise bis auf die Betriebstemperatur vorerwärmt werden kann, wonach schnell und effizient gestartet werden kann.

Das erfindungsgemässe Verfahren umfasst im Wesen vier verschiedenen Stufen. Die erste Stufe umfasst die Umsetzung des anzuwendenen Brennstoffes, der gegebenenfalls vorbehandelt sein kann, in Anwesenheit von Dampf in ein Gemisch, das H₂, CO, CO₂, H₂O, CH₄ und noch andere gasförmige Verbindungen enthält. Abhängig von der Art des Brennstoffes kann es notwendig sein, eine Vorbehandlung anzuwenden. Dies kann nötig sein zum Schützen der Katalysatoren vor Vergiftung oder Beschädigung, oder zum Verschaffen optimaler Verfahrensbedingungen. Bei solchen Vorbehandlungen kann man an Entschwefelung, Wärmeaustausch, Filtrieren u.dgl. denken.

In Abhängigkeit von dem anzuwendenen Brennstofftyp kann die Temperatur der Dampfreformierungs-Reaktion von 250°C bis 1000°C variieren. Alkanole, wie Äthanol, erfordern niedrigere Temperaturen als Kohlenwasserstoffe, wie Naphta und Erdgas. Für Naphta und Erdgas liegen die üblichen Temperaturen zwischen etwa 600 und 1000°C. Die Anwendung letztgenannter Temperaturen wird bevorzugt. Für Dampfreformierung liegen die üblichen Druckwerte zwischen 1 und 50 Bar.

Das in dieser ersten Stufe erhaltene Gas wird der zweiten Stufe, der "shift"-Reaktion, zugeführt, wo in Gegenwart von Dampf, mindestens ein Teil des vorhandenen CO weiter umgesetzt wird. Diese Reaktion erfolgt in Anwesenheit eines Katalysators. In der Praxis sind verschiedene Arten Katalysator anwendbar. Die Wahl wird wenigstens teilweise durch die Temperatur bestimmt, die man in dieser Stufe anwenden will. Im allgemeinen liegt diese Temperatur zwischen 150 und 500°C.

Geeignete Katalysatoren Können auf Cu/Zn oder auf Fe/Cr basiert sein. Diese Katalysatoren sind vorzugsweise auf einem inerten Trägermaterial angebracht.

In diesem Zusammenhang wird bemerkt, dass die "shift"-Reaktion eine exotherme Reaktion ist, so dass die Arbeitstemperatur des Reaktors im allgemeinen höher ist als die Temperatur des Einlasses, d.h. des Gases, das dem Reaktor zugeführt wird.

In der dritten Verfahrensstufe erfolgt ein Wärmeaustausch zwischen verschiedenen Prozess-Strömen. Wegen des Zusammenhangs mit den weiteren Verfahrensstufen wird dies erst nach der Behandlung der vierten Verfahrensstufe besprochen werden.

Die vierte Verfahrensstufe wird durch die Brennstoffzelleneinheit gebildet. Diese Einheit besteht aus an sich bekannten Brennstoffzellen, die zu einer Einheit (stack) zusammengefügt sind. Wesentlich ist dabei, dass die Arbeitstemperatur der Zelle bei minimal 125°C liegt, weil sonst die Vorteile des Verfahrens gemäss der Erfindung in ungenügendem Masse erreicht werden. Die obere Grenzen der Temperatur beträgt 500°C, vorzugsweise 400°C, weil höhere Temperaturen keine zusätzlichen Vorteile liefern. Ein Brennstoffzellentyp, der sich besonders zur Anwendung bei dem erfindungsgemässen Verfahren eignet, ist die auf Phosphorsäure basierte Brennstoffzelle. Diese Zelle arbeitet bei einer Temperatur von 150-200°C, vorzugsweise bei 180°C. In der Brennstoffzelle wird Wasserstoff mit Sauerstoff in elektrische Energie und Wärme umgesetzt. Diese Wärme muss abgeführt werden, um die Temperatur auf dem richtigen Wert zu halten. Dies erfolgt im Prinzip durch ein Dampfsystem, in dem man den Druck derart wählt, dass die Dampftemperatur weit genug unter der Arbeitstemperatur der Zelle liegt, um den Überschuss an Wärme abzuführen. Eine geeignete Temperaturdifferenz ist maximal 50°C, vorzugsweise 5-25°C. Als Beispiel kann man angeben, dass bei einer Brennstoffzellentemperatur von 180°C zweckmässig eine Dampftemperatur von 170°C angewendet werden kann, was einem Dampfdruck von 8 Bar entspricht.

Bemerkt wird noch, dass die Anwendung von Brennstoffzellen auf der Basis von alkalischen Elektrolyten nicht bevorzugt wird, weil dabei im allgemeinen die Integrationsmöglichkeiten zu gering sind durch die niedrige Arbeitstemperatur derselben.

Das Gas, das Wasserstoff enthält, wird nach Vorerwärmung in der dritten Stufe den Anodenräumen zugeführt, während das sauerstoffhaltige Gas nach Vorerwärmung den Kathodenräumen zugeführt wird. Im allgemeinen tritt in der Brennstoffzelle keine vollständige Umsetzung auf, so dass zwei Restgase erhalten werden. In dem wasserstoffhaltigen Gas befindet sich im allgemeinen noch 5-45% der ursprünglichen Menge Wasserstoff. Dieses Restgas verwendet man vorteilhafterweise als Brennstoff für die Dampfreformierungsstufe.

Die Umsetzung von Sauerstoff wird im allgemeinen niedriger sein als die Umsetzung von Wasserstoff. Weil man dazu meistens Luft anwendet, wird das Restgas, gegebenenfalls nach Wärmerückgewinnung, abgeblasen.

Das von dem "shift"-Reaktor herrührende Gas wird in der dritten Stufe des erfindungsgemässen Verfahrens behandelt, um ein möglichst optimales Speisegas für die Brennstoffzelleneinheit zu erhalten. Durch eine maximale Anwendung von Wärmeaustausch erhält man eine möglichst hohe Leistung und gleichzeitig eine gute Temperaturregelung der verschiedenen Verfahrensstufen.

Für die Arbeitstemperatur des "shift"-Reaktors wird ein Wert gewählt, der in der Nähe der Betriebstemperatur der Brennstoffzelle liegt. Vorzugsweise liegt die Temperatur des "shift"-Reaktors etwas über der Temperatur des Brennstoffzelle. Das von der Dampfreformierung herrührende Speisegas ist zu heiss, um sofort dem "shift"-Reaktor zugeführt zu werden und muss daher bis auf den gewünschten Wert abgekühlt werden.

Bei Anwendung des erfindungsgemässen Verfahrens kann dies nun einfach durch Wärmeaustausch in dem Dampfproduktionssystem, z.B. einem Dampfgefäss erfolgen.

Überschüssige Wärme wird dabei in Dampf umgesetzt, während gleichfalls eine ideale Temperaturregelung für die "shift"-Reaktor-Einlasstemperatur erhalten wird.

Der wasserstoffreiche Gasstrom aus dem "shift"-Reaktor muss zum Kondensieren und Abtrennen von überschüssigem Dampf und gegebenenfalls vorhandenen Verunreinigungen zunächst abgekühlt werden. Das Gas wird dann verfügbar bei einer Temperatur von etwa 25-75°C und soll bis auf etwa 150-250°C vorerwärmt werden. Das sauerstoffhaltige Gas soll gleichfalls bis auf diese Temperatur erwärmt werden. Dies kann in einfacher Weise mit Hilfe des in dem System erzeugten Dampfes, z.B. durch Kondensation von Dampf erfolgen.

Abwärme der Brennstoffzelle wird gleichfalls in Dampf umgesetzt. Eine Wärmebilanz des Dampfsystems gibt an, dass die Produktion von Dampf für den Bedarf der ganzen Anlage reichlich genügend ist, was bedeutet, dass es möglich ist, durch Abblasen von Dampf das ganze System in einem stabilen Zustand zu halten, wodurch die Durchführung des Verfahrens noch weiter verbessert und vereinfacht wird. Bevor der Dampf abgeblasen wird, kann man diesen noch zum Entgasen des Kesselspeisewassers anwenden.

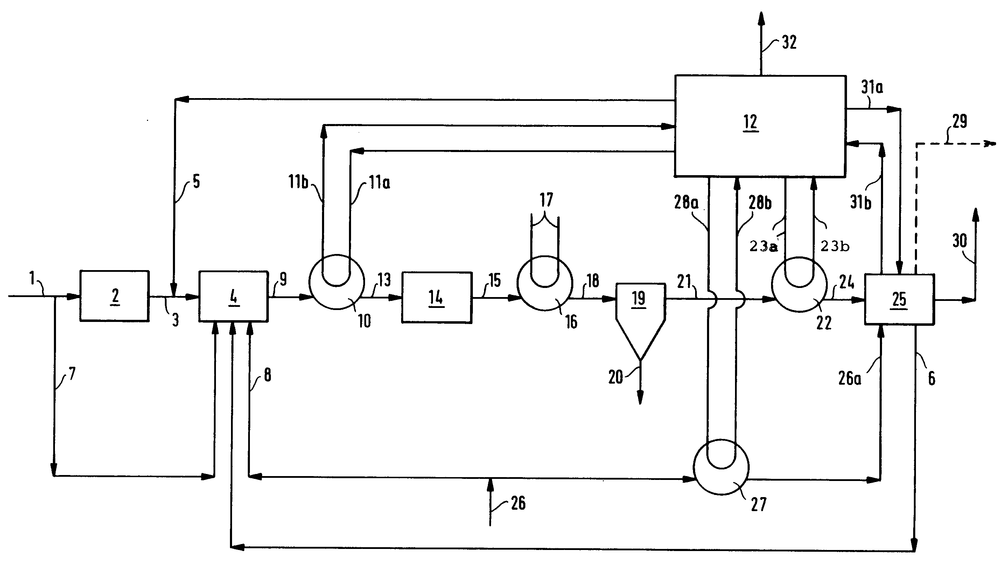

Die Erfindung wird jetzt an Hand der Figur, in der ein Blockschema einer Ausführungsform des erfindungsgemässen Verfahrens gegeben ist, erläutert.

Über eine Leitung 1 wird ein auf Kohlenwasserstoff basierter Brennstoff einer Entschwefelungsvorrichtung 2 zugeführt. Der entschwefelte Brennstoff wird über eine Leitung 3 einem Dampfreformer 4 zugeführt, nachdem der Brennstoff mit Dampf vermischt worden ist, der über eine Leitung 5 zugeführt ist. Über eine Leitung 6 wird Brennstoff (Brenngas) für die Dampfreformierung zugeführt, welcher Brennstoff von einem späteren Teil des Verfahrens herrührt. Erwünschtenfalls kann über eine Leitung 7 zusätzlicher Brennstoff dem Dampfreformer 4 zugeführt werden. Über eine Leitung 3 wird ein O₂-haltiges Gas für die Verbrennung zugeführt. Das produzierte H₂ und CO enthaltende Gas wird über eine Leitung 9 einem Wärmeaustauscher 10 zugeführt, in dem das Gas mit Hilfe von über Leitungen 11a und 11b zu- und abgeführtem wärmeaustauschenden Medium bis auf den gewünschten Wert abgekühlt wird. In einem Dampfgefäss 12 wird diese Wärme in Dampf umgesetzt.

Das so abgekühlte Gas wird über eine Leitung 13 einem "shift"-Reaktor 14 zugeführt. In diesem Reaktor wird ein grosser Teil des im Gas vorhandene CO mit dem schon im Gas vorhandenen Dampf in Wasserstoff umgesetzt. Das Gas wird über eine Leitung 15 dem Wärmeaustauscher 16 zugeführt, in dem es mit über eine Leitung 17 zu- und abgeführtem Kühlwasser abgekühlt wird. Über eine Leitung 18 wird das Gas dem Ausstossgefäss 19 zugeführt, in der die kondensierten Verunreinigungen und Wasser abgetrennt und über eine Leitung 20 abgeführt werden.

Über eine Leitung 21 wird das so gereinigte und getrocknete Gas einem Wärmeaustauscher 22 zugeführt, in dem mit Hilfe von über eine Leitung 23a zugeführtem kondensierendem Dampf erwärmt wird. Das Kondensat wird über eine Leitung 23b dem Dampfgefäss 12 zurückgeführt. Über eine Leitung 24 wird sodann das H₂-haltige Gas den Anodenräumen der Brennstoffzelleneinheit 25 zugeführt.

Über Leitungen 26 und 26a wird ein Sauerstoff enthaltendes Gas, wie Luft, den Kathodenräumen der Brennstoffzelleneinheit 25 zugeführt. In der Leitung 26a befindet sich ein Wärmeaustauscher 27, in dem das Gas in ähnlicher Weise, wie für den Wärmeaustauscher 22 beschrieben, mit kondensierendem Dampf erwärmt wird. Die Zu- und Abfuhr von Dampf bzw. Kondensat erfolgt über Leitungen 28a und 28b.

In der oben beschriebenen Konfiguration ist von der Anwendung gesonderter Wärmeaustauscher 22 und 27 ausgegangen. Es ist jedoch auch möglich, der Wärmeaustausch in dem Dampfgefäss 12 durchzuführen.

In der Brennstoffzelleneinheit 25 wird Elektrizität produziert, die über 29 abgeführt wird Über eine Leitung 30 wird Restgas, das noch O₂ enthält, abgelassen. Das Restgas, das noch H₂ enthält, wird über eine Leitung 6 als Brenngas dem Dampfreformer 4 zurückgerührt.

Über eine Leitung 31a wird der Brennstoffzelleneinheit 25 Wasser zugeführt, welches die überschüssige Wärme aufnimmt, und welches über eine Leitung 31b der Dampfgefäss 12 zurückgeführt wird, in der Dampf produziert wird.

Der Kühlkreis für die Brennstoffzelleneinheit 25 kann ein Teil eines einzigen integrierten Dampfsystems sein, aber es kann auch Vorteile haben, einen geschlossenen Kühlkreis für die Abfuhr von Wärme aus der Brennstoffzelleneinheit anzuwenden. In diesem Fall wird mit Hilfe einer Flüssigkeit, wie Wasser oder eine andere Wärmeübertragungsflüssigkeit` Wärme aus der Brenstoffzelleneinheit abgeführt, welche Wärme über einen Wärmeaustauscher den anderen Prozess-Strömen übertragen werden kann, während der Überschuss in Prozessdampf umgesetzt wird.

Der zuviel produzierte Dampf wird über eine Leitung 32 abgeblasen, welche Massnahme gleichfalls dazu dient, die Temperatur in dem ganzen System zu regeln.

Die Erfindung wird jetzt an Hand des nachstehenden Beispiels erklärt, welches Beispiel nur als Erläuterung gemeint ist.

### BEISPIEL

Einer Anlage, wie diese in der Figur beschrieben ist, und mit einer Brennstoffzelle auf der Basis von Phosphorsäure versehen ist, wurden 100 kMol/Stunde Erdgas (Schlochterengas) zugeführt mit einem Energie-Inhalt von 38.474,0 kJ/kg. Ein Dampf/Kohlenstoff-Verhältnis von 3,3 wurde in der Speisung des Dampfreformers bei einer Temperatur von 730°C und einem Druck von 1,3 Bar angewendet.

Der Methan-Durchschlag (slip) betrug 0,44% (trocken).

Das so erhaltene H₂ und CO enthaltende Gas wurde bis auf eine Temperatur von 200°C abgekühlt und dem "shift"-Reaktor zugeführt, der bei einer Temperatur von etwa 250°C betrieben wurde. Die abgeführte Wärme wurde zum Produzieren von Dampf mit einem Druck von 8 Bar und einer Temperatur von 170°C angewendet.

Das in dem "shift"-Reaktor produzierte Gas wurde abgekühlt, die kondensierten Stoffe wurden abgetrennt und das erhaltene Gas, das 345,5 kMol/Stunde H₂ enthielt, wurde mit Hilfe von kondensierendem Dampf bis auf eine Temperatur von 160°C erwärmt, worauf es der Brennstoffzelleneinheit zugeführt wurde, die eine Betriebstemperatur von 180°C hatte. Die direkte Elektrizitätsproduktion betrug 8,8 MW, während 8,7 MW Niederdruckdampf erzeugt wurden, die anderswo in dem System gebraucht wurden.

Etwa 80% des zugeführten H₂ wurde umgesetzt. Das Restgas wurde zusammen mit dem Erdgas dem Dampfreformer zugeführt. Dieser Dampfreformer verwendete 6,9 MW, von denen 5,2 MW aufgenommen wurden, was einer Leistung von 75% entspricht.

Die gesammte Energiezufuhr zu der Anlage betrug 21,6 MW. Unter Berücksichtigung des eigenen Energiebedarfs der Anlage betrug die Leistung etwa 39%, berechnet als das Verhältnis der Menge an produziertem Wechselstrom zu dem "Lower heating value" der Speisung (x 100%).

## Patentansprüche

1. Verfahren zum Erzeugen von Elektrizität aus einem Brennstoff auf der Basis eines oder mehrerer Kohlenwasserstoffe, wobei man
- den genannten Brennstoff katalytisch in ein CO- und H₂-haltiges Gas umsetzt,
- das so erhaltene Gas unter Bildung von Prozeßdampf abkühlt,
- das abgekühlte Gas mindestens einem "shift"-Reaktor zuführt, in dem wenigstens ein Teil des vorhandenen CO mit Dampf unter Bildung von H₂ umgesetzt wird,
- das H₂-haltige Gas den Anodenräumen mindestens einer Brennstoffzelleneinneit zuführt, die unter Kühlung und gleichzeitiger Bildung von Prozeßdampf auf Arbeitstemperatur gehalten wird,
- die Arbeitstemperatur der Brennstoffzelleneinheit und die Temperatur des dem "shift"-Reaktor zugeführten Gases um nicht mehr als 50°C voneinander verschieden hält,
- eine Brennstoffzelleneinheit mit einer Arbeitstemperatur von mindestens 125°C anwendet,
- den erzeugten Prozeßdampf auch anwendet zum Erwärmen von Einspeisungen in die Brennstoffzelle und
- die Prozeßdampferzeugung in ein und demselben Dampfsystem vornimmt, wobei in der Verfahrensführung über die Regelung des Dampfdrucks im Dampfsystem eine Dampftemperatur festgelegt wird, die hinreichend unter der Arbeitstemperatur der Zelle liegt, um den Überschuß an Wärme abzuführen.

2. Verfahren nach Anspruch 1, in dem man das H₂-haltige Gas abkühlt, um den grössten Teil der Verunreinigungen zu kondensieren.

3. Verfahren nach den Ansprüchen 1-2, in dem man als Brennstoff Erdgas, LPG, Naphta, Biogas, von Müll herrührendes Gas, und niedere Alkanole anwendet.

4. Verfahren nach den Ansprüchen 1-3, in dem man eine Brennstoffzelleneinheit mit einer Arbeitstemperatur zwischen 125°C und 500°C anwendet.

5. Verfahren nach den Ansprüchen 1-4, in dem man eine Brennstoffzelleneinheit auf der Basis von Phosphorsäure anwendet.

6. Verfahren nach den Ansprüchen 1-5, in dem die Differenz zwischen der Arbeitstemperatur des Dampfsystems und der Arbeitstemperatur der Brennstoffzelleneinheit nicht mehr als 50°C beträgt.

7. Verfahren nach Anspruch 6, in dem die Differenz zwischen 7 und 25°C liegt.

8. Verfahren nach den Ansprüchen 1-7, in dem man die genannte katalytische Umsetzung des CO- und H₂-haltigen Gases bei einer Temperatur zwischen 600 und 1000°C durchführt.

## Claims

1. Method for generating electricity from a fuel on the basis of one or more hydrocarbons, in which
- said fuel is catalytically converted into a CO and H₂ containing gas,
- the thus obtained gas is cooled with formation of process steam,
- the cooled gas is fed to at least one shift reactor, in which at least part of the CO present is converted with steam with formation of H₂,
- the H₂ containing gas is fed to the anode spaces of at least one fuel cell unit, which is maintained at the operating temperature with cooling and simultaneous formation of process steam,
- the operating temperature of the fuel cell unit and the temperature of the gas fed to the shift reactor are kept different from each other by not more than 50°C,
- a fuel cell unit is used having an operating temperature of at least 125°C,
- the generated process steam is also used to heat feeds into the fuel cell, and
- the process steam generation is effected in one and the same steam system, in the procedure of which is determined, by means of regulation of the steam pressure in the steam system, a steam temperature sufficiently below the operating temperature of the cell to discharge the excess of heat.

2. Method according to claim 1, in which the H₂ containing gas is cooled to condensate the greater part of the impurities.

3. Method according to claims 1-2, in which the fuel used is natural gas, LPG, naphta, biogas, gas from household refuse, and lower alkanols.

4. Method according to claims 1-3, in which a fuel cell unit is used having an operating temperature between 125°C and 500°C.

5. Method according to claims 1-4, in which a fuel cell unit is used on the basis of phosphoric acid.

6. Method according to claims 1-5, in which the difference between the operating temperature of the steam system and the operating temperature of the fuel cell unit is not more than 50°C.

7. Method according to claim 6, in which the difference is between 7°C and 25°C.

8. Method according to claims 1-7, in which said catalytic conversion of the CO and H₂ containing gas is carried out at a temperature between 600°C and 1000°C.

## Revendications

1. Procédé de création d'électricité à partir d'un combustible à base d'un ou de plusieurs hydrocarbures, dans lequel:
- on transforme par voie catalytique ledit combustible en un gaz contenant CO et H₂,
- on refroidit le gaz ainsi obtenu, avec formation de vapeur de procédé,
- on amène le gaz refroidi dans au moins un réacteur de conversion catalytique du CO, dans lequel au moins une partie du CO présent réagit avec de la vapeur avec formation de H₂,
- on amène le gaz contenant H₂ aux chambres anodiques d'au moins une cellule à combustible, qui est maintenue à la température de travail par refroidissement et formation simultanée de vapeur de procédé,
- on maintient la température de travail de la cellule à combustible et la température du gaz amené au réacteur de conversion catalytique du CO à des valeurs qui ne diffèrent pas l'une de l'autre de plus de 50°C,
- on utilise une cellule à combustible présentant une température de travail d'au moins 125°C,
- on utilise également la vapeur de procédé pour réchauffer les alimentations de la cellule à combustible, et
- on effectue la création de vapeur de procédé dans un système de vapeur unique, une température de vapeur étant déterminée dans la gestion du procédé, par l'intermédiaire de la régulation de la pression de vapeur dans le système de vapeur, cette température étant située suffisamment en dessous de la température de travail de la cellule à combustible pour en extraire la chaleur en excès.

2. Procédé selon la revendication 1, caractérisé en ce que l'on refroidit le gaz contenant H₂ pour condenser la plus grande partie des impuretés.

3. Procédé selon les revendications 1-2, caractérisé en ce que l'on utilise comme combustible du gaz naturel, du GPL, du naphte, du biogaz, du gaz provenant d'ordures et des alcanols inférieurs.

4. Procédé selon les revendications 1-3, caractérisé en ce que l'on utilise une cellule à combustible présentant une température de travail entre 125°C et 500°C.

5. Procédé selon les revendications 1-4, caractérisé en ce que l'on utilise une cellule à combustible à base d'acide phosphorique.

6. Procédé selon les revendications 1-5, caractérisé en ce que la différence entre la température de travail du système de vapeur et la température de travail de la cellule à combustible ne se monte pas à plus de 50 °C.

7. Procédé selon la revendication 6, caractérisé en ce que la différence de température vaut entre 7 et 25°C.

8. Procédé selon les revendications 1-7, caractérisé en ce que l'on effectue ladite conversion catalytique du gaz contenant CO et H₂ à une température d'entre 600 et 1000°C.
